# EUROPÄISCHE PATENTANMELDUNG

(11) **EP 4 650 823 A1**
(43) Veröffentlichungstag der Anmeldung: **19.11.2025**
(21) Anmeldenummer: 25176138.3
(22) Anmeldetag: 13.05.2025
(51) Int. Cl.: G01S 7/481, G01S 17/42

(54) **OPTISCHER SENSOR**

(30) Priorität: 14.05.2024 DE 102024113432
(71) Anmelder: Pepperl+Fuchs SE, 68307 Mannheim (DE)
(72) Erfinder: TABEL, Ernst, 68307 Mannheim (DE); WEBER, Hinrik, 68307 Mannheim (DE)
(74) Vertreter: Schiffer, Axel Martin

(57) **Zusammenfassung**

Die Erfindung betrifft einen optischen Sensor zum Nachweisen von Objekten in einem Überwachungsbereich, mit einem ersten Lichtsender zum Aussenden eines ersten Sendelichtstrahls, mit einem Drehspiegel, über welchen der erste Sendelichtstrahl in den Überwachungsbereich geleitet wird, mit einer Detektoreinheit zum Nachweisen von aus dem Überwachungsbereich von einem nachzuweisenden Objekt zurückgestrahltem Sendelicht als Detektionslicht, mit einer Steuereinheit zum Ansteuern des ersten Lichtsenders und der Detektoreinheit und zum Auswerten von von der Detektoreinheit nachgewiesenem Detektionslicht. Der optische Sensor ist erfindungsgemäß dadurch gekennzeichnet, dass zum Aussenden eines zweiten Sendelichtstrahls ein zweiter Lichtsender vorhanden ist, dass eine Senderichtung des ersten Sendelichtstrahls und eine Senderichtung des zweiten Sendelichtstrahls einander entgegengesetzt und jeweils quer zu einer Drehachse des Drehspiegels orientiert sind und dass die Steuereinheit auch zum Ansteuern des zweiten Lichtsenders eingerichtet ist.

## Beschreibung

Die vorliegende Erfindung betrifft einen optischen Sensor zum Nachweisen von Objekten in einem Überwachungsbereich nach dem Oberbegriff des Anspruchs 1.

Ein gattungsgemäßer optischer Sensor zum Nachweisen von Objekten in einem Überwachungsbereich weist mindestens folgende Bestandteile auf: einen ersten Lichtsender zum Aussenden eines ersten Sendelichtstrahls, einen Drehspiegel, über welchen der erste Sendelichtstrahl in den Überwachungsbereich geleitet wird, eine Detektoreinheit zum Nachweisen von aus dem Überwachungsbereich von einem nachzuweisenden Objekt zurückgestrahltem Sendelicht als Detektionslicht und eine Steuereinheit zum Ansteuern des ersten Lichtsenders und der Detektoreinheit und zum Auswerten von von der Detektoreinheit nachgewiesenem Detektionslicht.

Solche optischen Sensoren sind beispielsweise bekannt aus EP 1 496 464 A1 und EP 1 569 158 A1.

Optische Sensoren bestehend aus einer Sendeeinheit zur Aussendung von Lichtenergie und einer Empfangseinheit zum Empfang optischer Energie, die nach dem Prinzip der Lichtlaufzeitmessung arbeiten, werden oft zur Objektdetektion, zur Bestimmung eines Objektabstands und/oder zur Bestimmung einer Objektreflektanz eingesetzt. Diese Art der Sensorik eignet sich besonders zur sicheren Detektion eines Objekts. Setzt man derartige Sensoren auf eine Bewegungseinheit oder lenkt man die optischen Strahlen durch optische Elemente ab, entsteht ein optisches Messsystem welches einen Bereich, z.B. eine Linie oder eine Fläche, vermisst. Solche Messsysteme werden auch als Scanner bezeichnet.

Eine Sonderform derartiger Scanner kann dadurch realisiert werden, dass Spiegel zur Strahlablenkung eingesetzt werden, die relativ zu einer raumfesten Anordnung einer Sendeeinheit und einer Empfangseinheit des Sensors gedreht oder geschwenkt werden.

Insbesondere können so Linienscanner verwirklicht werden. Weitverbreitet sind Spiegelscanner, bei denen ein planarer Spiegel mit einer Neigung von 45° relativ zu einer Drehachse der Sensoreinheit rotiert. Es entsteht ein Rotationsscanner, der einen axial auf den Spiegel gestrahlten Messstrahl in eine Messebene ablenkt. Je nach Ausführungsform können so Erfassungsbereiche von 180°, 270° oder 360° in der Messebene verwirklicht werden. Die optischen Elemente zur Strahlablenkung sind einfach und preisgünstig zu realisieren. Der Spiegel ist in der Regel auf der Drehachse einer Dreheinheit, meist elektromagnetisch realisiert, positioniert. Zusammen mit der Anordnung der Sensoreinheit in das Motor-Spiegel-System entsteht ein meist komplexer, baugroßer und teurer Aufbau.

Preiswertere und im Aufbau kleinere Scanner setzen meist Spiegel zur Strahlablenkung ein, die orthogonal zur Sender-Empfangseinheit aufgebaut sind. Diese Art Scanner sind klein, kompakt, preiswert und leistungsfähig realisierbar, besitzen aber wegen der optischen Anordnung einen eingeschränkten Scanbereich von oftmals kleiner 90°. Üblicherweise werden diese baukleinen und preiswerten Scanner zur Objekt- und Personendetektion und zur Kollisionsvermeidung bei fahrerlosen Fahrzeugen oder beispielsweise bei automatisierten Türen eingesetzt.

Als eine Aufgabe der Erfindung kann angesehen werden, einen optischen Sensor der oben angegebenen Art zu schaffen, bei dem mit vergleichsweise geringem konstruktivem Aufwand größere Scanbereiche möglich sind.

Diese Aufgabe wird durch den optischen Sensor mit den Merkmalen des Anspruchs 1 gelöst. Vorteilhafte Ausführungsbeispiele des erfindungsgemäßen optischen Sensors werden im Folgenden, insbesondere im Zusammenhang mit den abhängigen Ansprüchen und den Figuren erläutert.

Der optische Sensor der oben angegebenen Art ist erfindungsgemäß dadurch weitergebildet, dass zum Aussenden eines zweiten Sendelichtstrahls ein zweiter Lichtsender vorhanden ist, dass eine Senderichtung des ersten Sendelichtstrahls und eine Senderichtung des zweiten Sendelichtstrahls einander entgegengesetzt und jeweils quer zu einer Drehachse des Drehspiegels orientiert sind, und dass die Steuereinheit auch zum Ansteuern des zweiten Lichtsenders eingerichtet ist.

Unter dem Begriff eines optischen Sensors wird hier eine Messeinrichtung verstanden, die Sendestrahlung, insbesondere Sendelicht, in einen Überwachungsbereich aussendet und aus dem Überwachungsbereich kommende Strahlung detektiert. Der erfindungsgemäße optische Sensor kann auch als optischer Scanner bezeichnet werden.

Die Sendestrahlung ist elektromagnetische Strahlung im sichtbaren Bereich und angrenzenden Bereichen. Die Begriffe Sendestrahlung und Sendelicht werden in der vorliegenden Beschreibung synonym verwendet. Dabei bedeutet Sendelicht nicht notwendig, dass es sich um elektromagnetische Strahlung im sichtbaren Bereich handelt. Bevorzugt kann es sich beispielsweise auch um Infrarotlicht handeln.

Der Überwachungsbereich kann grundsätzlich ein beliebiger Raumbereich sein, in den die Sendestrahlung gesendet und aus welchem zurückgestrahltes Sendelicht detektiert werden kann.

Die zu detektierenden oder nachzuweisenden Objekte können grundsätzlich beliebiger Natur sein. Voraussetzung ist nur, dass sie das Sendelicht hinreichend stark zurückstrahlen. Das bedeutet, dass ein vollständig schwarzes Objekt mit dem erfindungsgemäßen optischen Sensor nicht nachgewiesen werden könnte.

Unter dem Begriff des Zurückstrahlens wird insbesondere ein Zurückreflektieren und ein Zurückstreuen verstanden.

Aus dem Überwachungsbereich zurückgestrahltes Sendelicht wird auch als Detektionslicht bezeichnet.

Als Lichtsender können grundsätzlich jedwede Strahlungsquellen verwendet werden, welche das Sendelicht in der gewünschten Intensität und in einem gewünschten Wellenlängenbereich liefern. Besonders bevorzugt werden Halbleiterquellen verwendet. Bei vorteilhaften Ausgestaltungen des erfindungsgemäßen optischen Sensors können der erste Lichtsender und/oder der zweite Lichtsender und/oder gegebenenfalls mindestens ein weiterer Lichtsender durch eine Leuchtdiode, eine Laserdiode oder eine VCSEL-Diode gebildet sein.

Zunächst wird unter dem Begriff des Sendelichtstrahls ein gerichteter Strahl des Sendelichts verstanden. Sodann ist mit dem Begriff der Senderichtung eine relativ zu einem Gehäuse des Sensors im Wesentlichen ortsunveränderliche Richtung eines von den Lichtquellen gelieferten Sendelichtstrahls gemeint, bevor das Sendelicht durch den Drehspiegel in Richtung des Überwachungsbereich abgelenkt wird. Der Sendelichtstrahl kann kollimiert oder fokussiert sein. Zur Strahlformung des Sendelichtstrahls können optische Komponenten, wie Linsen, Spiegel, Gitter, Prismen, Blenden vorhanden sein. Mit dem Begriff der Senderichtung ist beispielsweise bei kollimierten oder fokussierten Strahlen die optische Achse dieser Strahlen gemeint. Wenn der Strahl nicht ideal kollimiert oder fokussiert ist, ist die Senderichtung die Schwerpunktrichtung des Lichtstrahls. Einer, mehrere oder jeder der Lichtsender kann eine Sendeoptik, beispielsweise eine Linse und/oder einen Hohlspiegel, aufweisen.

Mit dem Begriff des Drehspiegels wird eine Komponente mit mindestens einer Spiegelfläche bezeichnet, die um mindestens eine Drehachse verschwenkt oder kontinuierlich gedreht werden kann. Der Drehspiegel kann als Teil einer Sendeoptik angesehen werden.

Die Detektoreinheit weist mindestens einen Detektor zum Nachweisen von aus dem Überwachungsbereich zurückgestrahltem Sendelicht auf. Als Detektor können grundsätzlich bekannte Komponenten eingesetzt werden, mit denen die elektromagnetische Strahlung in dem relevanten Wellenlängenbereich hinreichend effektiv nachgewiesen werden kann. Besonders bevorzugt werden Halbleiterkomponenten, wie Fotodioden, PIN-Dioden, Avalanche-Dioden, SPAD-Dioden verwendet.

Die Steuereinheit kann verwirklicht sein beispielsweise durch einen Mikrocontroller oder vergleichbare, insbesondere programmierbare, Komponenten, wie PLDs (PLD=Programmable Logic Devices), PALs (PAL=Programmable Array Logic), PLAs (PLA=Programmable Logic Array), FPGAs (FPGA=Field Programmable Gate Array).

Als eine erste wesentliche Idee der vorliegenden Erfindung kann angesehen werden, zusätzlich zu dem ersten Lichtsender, einen zweiten Lichtsender vorzusehen, der so angeordnet wird, dass die Senderichtung des ersten Sendelichtstrahls entgegengesetzt ausgerichtet ist wie die Senderichtung des zweiten Sendelichtstrahls.

Als zweite wichtige Idee der vorliegenden Erfindung kann erachtet werden, die beiden Lichtsender dergestalt anzuordnen, dass die Senderichtung des ersten Sendelichtstrahls und die Senderichtung des zweiten Sendelichtstrahls quer zu einer Drehachse des Drehspiegels orientiert sind.

Als erster wichtiger Vorteil der vorliegenden Erfindung kann angesehen werden, dass bei kompaktem Aufbau mit vergleichsweise einfachen Mitteln deutlich vergrößerte Scanbereiche möglich sind. Der erfindungsgemäße optische Sensor eignet sich deshalb insbesondere für Anwendungen, bei denen zur Installation nur begrenzte Baumräume zur Verfügung stehen. Insbesondere können sich die durch den ersten Lichtsender und den zweiten Lichtsender und gegebenenfalls durch weitere Lichtsender erfassten Raumbereiche des Überwachungsbereichs teilweise an den Rändern überlappen, sodass großer Überwachungsbereichs ohne Lücken überwacht wird.

Die Senderichtung des ersten Sendelichtstrahls und die Senderichtung des zweiten Sendelichtstrahls können sich insbesondere schneiden oder berühren. Bei einer besonders bevorzugten Ausgestaltung des erfindungsgemäßen optischen Sensors nimmt eine zur Senderichtung des ersten Sendelichtstrahls parallele Richtung, die den zweiten Sendelichtstrahl schneidet, zu dem zweiten Sendelichtstrahl einen Winkel ein, der zwischen 165° und 195°, bevorzugt zwischen 175° und 185° und besonders bevorzugt zwischen 177 und 182° liegt. Es ist aber auch möglich, dass eine Senderichtung des ersten Sendelichtstrahls und des zweiten Sendelichtstrahls antiparallel und kollinear zueinander verlaufen.

Grundsätzlich ist es möglich, dass eine Senderichtung von einem Lichtsender, von mehreren Lichtsendern oder von allen Lichtsendern gegen eine Ebene, die senkrecht auf der Drehachse des Drehspiegels steht, um einen Kippwinkel verkippt ist. Beispielsweise kann der Kippwinkel für einen Lichtsender, für mehrere Lichtsender oder für allen Lichtsender kleiner sein als +/-10°, bevorzugt kleiner sein als +/-5° und besonders bevorzugt kleiner sein als +/-3°. Der Kippwinkel kann insbesondere für unterschiedliche Lichtsender unterschiedlich sein. Dadurch kann erreicht werden, dass Raumbereiche oberhalb und/oder unterhalb der Ebene, die senkrecht auf der Drehachse des Drehspiegels steht, mit der Sendestrahlung abgetastet werden und dort befindliche Objekte nachgewiesen werden können.

Ein bevorzugtes Ausführungsbeispiel zeichnet sich dadurch aus, dass eine Senderichtung von einem Lichtsender, von mehreren Lichtsendern oder von allen Lichtsendern in einer Ebene liegt, die senkrecht auf der Drehachse des Drehspiegels steht.

Zur Verwirklichung der Erfindung sind grundsätzlich nur zwei Lichtsender notwendig. Bei aufwändigeren Ausführungsbeispielen können aber ein dritter Lichtsender zum Aussenden eines dritten Sendelichtstrahls und ein vierter Lichtsender zum Aussenden eines vierten Sendelichtstrahls vorhanden sein, wobei der dritte Sendelichtstrahl und der vierte Sendelichtstrahl über den Drehspiegel in den Überwachungsbereich geleitet werden, und wobei die Steuereinheit auch zum Ansteuern des dritten Lichtsenders und des vierten Lichtsenders eingerichtet ist.

Bevorzugt können dabei eine Senderichtung des dritten Sendelichtstrahls und eine Senderichtung des vierten Sendelichtstrahls einander entgegengesetzt sein. Beispielsweise können eine Senderichtung des dritten Sendelichtstrahls und eine Senderichtung des vierten Sendelichtstrahls einander schneiden oder berühren. Besonders bevorzugt kann eine zur Senderichtung des dritten Sendelichtstrahls parallele Richtung, die den vierten Sendelichtstrahl schneidet, zu dem vierten Sendelichtstrahls einen Winkel einnehmen, der zwischen 165° und 195°, bevorzugt zwischen 175° und 185° und besonders bevorzugt zwischen 177 und 182° liegt. Eine Senderichtung des dritten Sendelichtstrahls und eine Senderichtung des vierten Sendelichtstrahls können aber auch antiparallel und kollinear zueinander verlaufen.

Ein bevorzugtes Ausführungsbeispiel zeichnet sich dadurch aus, dass die Senderichtungen von allen Sendelichtstrahlen in ein und derselben Ebene verlaufen. Es ist aber auch möglich, dass die Senderichtung des ersten Sendelichtstrahls oder eine zu dieser parallele Richtung, die die Senderichtung des dritten Sendelichtstrahls schneidet, zu der Senderichtung des dritten Sendelichtstrahls unter einem Winkel von kleiner als 30°, bevorzugt von kleiner als 20° und besonders bevorzugt von kleiner als 10°, verläuft. Alternativ oder ergänzend kann die Senderichtung des zweiten Sendelichtstrahls oder eine zu dieser parallele Richtung, die die Senderichtung des vierten Sendelichtstrahls schneidet, zu der Senderichtung des vierten Sendelichtstrahls unter einem Winkel von kleiner als 30°, bevorzugt von kleiner als 20° und besonders bevorzugt von kleiner als 10°, verlaufen.

Der erste und der zweite und gegebenenfalls weitere Lichtsender können grundsätzlich jeweils Sendelicht mit demselben Wellenlängenspektrum aussenden.

Ein besonders bevorzugtes Ausführungsbeispiel ist dadurch gekennzeichnet, dass einer, mehrere oder jeder der Lichtsender Sendelicht mit einem im Vergleich zu den anderen Lichtsendern unterschiedlichen Wellenlängenspektrum aussendet. Dadurch wird grundsätzlich ermöglicht, dass unterschiedliche Lichtsender gleichzeitig Sendelicht aussenden können und dass das jeweils zurückgestrahlte Sendelicht anhand seiner Wellenlänge oder spektralen Zusammensetzung getrennt werden kann. In diesem Zusammenhang kann auch zweckmäßig sein, wenn eine, mehrere oder jede der Detektoreinheiten einen Farbfilter aufweist zum selektiven Nachweisen von zurückgestrahltem Sendelicht einer bestimmten Wellenlänge oder eines bestimmten Wellenlängenspektrums.

Grundsätzlich ist es möglich, dass der erste Sendelichtstrahl und der zweite Sendelichtstrahl und gegebenenfalls weitere Sendelichtstrahlen kontinuierliche Sendelichtstrahlen sind. Das kann beispielsweise zweckmäßig sein, wenn für die Abstandsmessung ein Verfahren zum Einsatz kommt, bei dem die Sendelichtstrahlen moduliert werden und ein Phasenversatz des Sendelichtstrahls im Vergleich zu dem zurückgestrahlten Sendelicht gemessen wird.

Bei einer besonders bevorzugten Ausgestaltung des erfindungsgemäßen optischen Sensors sind der erste Sendelichtstrahl und der zweite Sendelichtstrahl und gegebenenfalls weitere Sendelichtstrahlen gepulste Lichtstrahlen. Das ist zweckmäßig für Verfahren, bei denen für die Abstandsmessung die Laufzeiten der Lichtpulse des Sendelichts gemessen werden.

Zu diesem Zweck kann die Steuereinheit bevorzugt dazu eingerichtet sein, die Lichtsender alternierend zum Aussenden von Lichtpulsen anzusteuern. Außerdem kann die Steuereinheit dazu eingerichtet sein, aus Sendezeitpunkten von Lichtpulsen und jeweils zugehörigen Empfangszeitpunkten jeweils eine Laufzeit und anhand der Laufzeit eine Entfernung eines zurückstrahlenden Objekts zu bestimmen.

Im Hinblick auf den Nachweis von aus dem Überwachungsbereich zurückgestrahltem Sendelicht kann grundsätzlich eine einzige Detektoreinheit ausreichend sein. Das bedeutet, dass die Steuereinheit zum Ansteuern der Detektoreinheit dergestalt eingerichtet sein kann, dass mit der Detektoreinheit sowohl von einem Objekt zurückgestrahltes Sendelicht des ersten Lichtsenders als auch von dem Objekt zurückgestrahltes Sendelicht des zweiten Lichtsenders und gegebenenfalls von dem Objekt zurückgestrahltes Sendelicht von mindestens einem weiteren Lichtsender als Detektionslicht nachweisbar ist.

Alternativ ist aber auch möglich, dass für jede Sendeeinheit eine separate Detektoreinheit vorhanden ist. Beispielsweise kann die Detektoreinheit eine erste Detektoreinheit sein und es kann eine zweite Detektoreinheit vorhanden sein und die Steuereinheit kann zum Ansteuern der ersten Detektoreinheit und der zweiten Detektoreinheit dergestalt eingerichtet sein, dass mit der ersten Detektoreinheit von einem Objekt zurückgestrahltes Sendelicht des ersten Lichtsenders nachweisbar ist und mit der zweiten Detektoreinheit von dem Objekt zurückgestrahltes Sendelicht des zweiten Lichtsenders nachweisbar ist.

Um das aus dem Überwachungsbereich zurückgestrahlte Sendelicht effektiv nachzuweisen, kann vorteilhaft eine, mehrere oder jede der Detektoreinheiten eine Empfangsoptik, beispielsweise eine Linse oder einen Hohlspiegel, aufweisen.

Zum Antrieb des Drehspiegels kann grundsätzlich ein gewöhnlicher Elektromotor, beispielsweise ein miniaturisierter Motor, der auch als Platinenmotor bezeichnet wird, zum Einsatz kommen. Der Platinenmotor kann bevorzugt ein Miniaturmotor und insbesondere ein Synchronmotor sein, wobei mindestens eine Wicklung des Platinenmotors in einer Platine integriert ist.

Im Hinblick auf die konkrete Ausgestaltung des Drehspiegels besteht Gestaltungsfreiheit. Die Erfindung wird grundsätzlich verwirklicht, wenn der Drehspiegel eine einzige Spiegelfläche aufweist. Höhere Messraten sind möglich, wenn der Drehspiegel zwei Spiegelflächen aufweist. Möglich ist aber auch, dass der Drehspiegel in einer Ausgestaltung als drehbarer Polygonspiegel drei oder mehr Spiegelflächen oder Spiegelfacetten aufweist. Die Spiegelflächen des Polygonspiegels können insbesondere relativ zur Drehrichtung angestellt oder verkippt sein.

Grundsätzlich ist es möglich, dass eine, mehrere oder jede der Spiegelflächen ein Wölbspiegel ist. Wölbspiegel werden auch als Konvexspiegel bezeichnet. Ebenso kann oder können eine, mehrere oder jede der Spiegelflächen ein ebener Spiegel sein.

Ein bevorzugtes Ausführungsbeispiel zeichnet sich dadurch aus, dass eine, mehrere oder jede der Spiegelflächen ein Hohlspiegel ist. Hohlspiegel werden auch als Konkavspiegel bezeichnet.

Die Spiegelflächen können als spiegelnde Beschichtungen auf einem Spiegelkörper, beispielsweise aus einem Kunststoffmaterial, gebildet sein. Bei zwei Spiegelflächen können diese auf gegenüberliegenden Seiten des Spiegelkörpers angeordnet sein. Bei zwei Spiegelflächen können diese zueinander parallel sein.

Um eine Abtastung des Überwachungsbereichs nicht nur in einer Ebene, sondern auch darüber und/oder darunter zu erreichen, kann es aber auch zweckmäßig sein, wenn die beiden Spiegelflächen um einen Winkel, beispielsweise von kleiner 10°, gegeneinander verkippt sind.

Eine Drehachse des Drehspiegels kann beispielsweise parallel zu einer Oberfläche von einer Spiegelfläche, von mehreren Spiegelflächen oder von jeder Spiegelfläche verlaufen. Auch kann die Normalenrichtung von einer, von mehreren oder von jeder der Spiegelflächen senkrecht zur Richtung einer Drehachse des Drehspiegels verlaufen.

Um eine Abtastung des Überwachungsbereichs nicht nur in einer Ebene, sondern auch darüber und/oder darunter zu erreichen, kann es aber auch zweckmäßig sein, wenn die Normalenrichtung von einer, von mehreren oder von jeder der Spiegelflächen relativ zur Richtung einer Drehachse des Drehspiegels verkippt ist.

Bevorzugt kann oder können die Normalenrichtungen der Spiegelflächen relativ zur Ebene, die senkrecht zur Richtung einer Drehachse des Drehspiegels verläuft, um jeweils unterschiedliche Verkippungswinkel verkippt sein.

Beispielsweise können die Verkippungswinkel im Intervall von -5° bis +5° liegen.

Um Signalinterferenzen zwischen den Sendestrahlengängen und den Detektionsstrahlengängen zu vermeiden, ist bei vorteilhaften Ausführungsbeispielen des erfindungsgemäßen optischen Sensors ein Gehäuse vorhanden, in dem die Lichtsender durch eine Trennwand, die für das Sendelicht undurchlässig ist, von der Detektionseinheit oder von den Detektionseinheiten getrennt ist.

Weitere Vorteile und Merkmale der vorliegenden Erfindung werden im Folgenden im Zusammenhang mit den beigefügten Figuren erläutert. Darin zeigt:
- Figur 1:: in schematischer Draufsicht ein erstes Ausführungsbeispiel eines erfindungsgemäßen optischen Sensors;
- Figur 2:: in schematischer Darstellung eine Ansicht des optischen Sensors aus Figur 1 von vorn (Schnittansicht entlang der Linie A-A);
- Figur 3:: in schematischer Draufsicht ein zweites Ausführungsbeispiel eines erfindungsgemäßen optischen Sensors;
- Figur 4:: in schematischer Darstellung eine Ansicht des optischen Sensors aus Figur 3 von vorn (Schnittansicht entlang der Linie B-B);
- Figur 5:: in schematischer Darstellung eine Ansicht eines dritten Ausführungsbeispiels eines erfindungsgemäßen optischen Sensors von vorn;
- Figur 6:: in schematischer Darstellung ein Beispiel eines Drehspiegels, der bei einem erfindungsgemäßen optischen Sensor eingesetzt werden kann;
- Figur 7:: in schematischer Darstellung ein Beispiel eines Drehspiegels mit zwei zueinander verkippten Spiegelflächen; und
- Figur 8:: in schematischer Darstellung eine Senderanordnung mit zwei Senderpaaren zur Verwendung bei einem erfindungsgemäßen optischen Sensor.

Gleiche und gleichwirkende Komponenten sind in den Figuren in der Regel mit denselben Bezugszeichen gekennzeichnet.

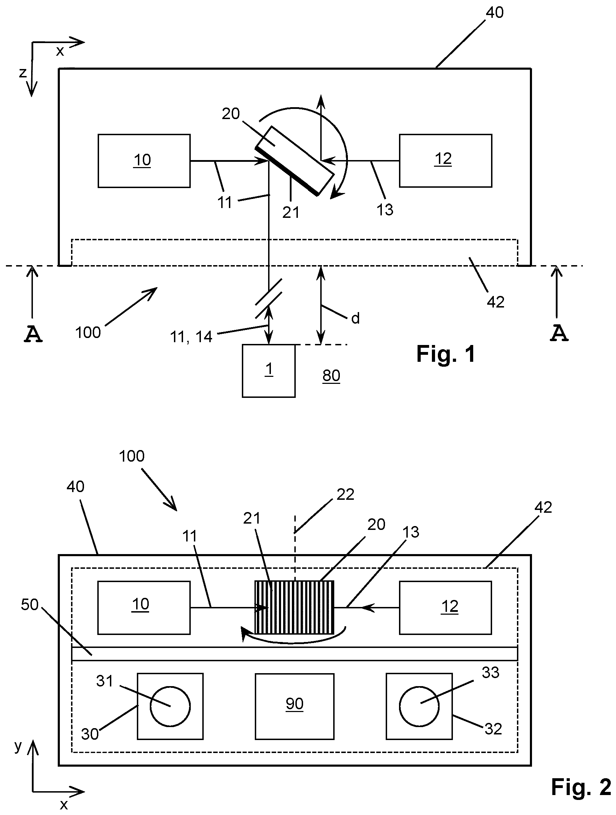

Ein erstes Ausführungsbeispiel eines erfindungsgemäßen optischen Sensors 100 wird mit Bezug auf die Figuren 1 und 2 beschrieben. Figur 1 zeigt den optischen Sensor 100 in einer schematischen Darstellung in Draufsicht. Figur 2 zeigt den optischen Sensor 100 in einer schematischen Darstellung von vorn, nämlich in einer Schnittansicht entlang der Linie A-A der Figur 1. Die Koordinatenrichtungen eines rechtwinkligen und rechtshändigen Koordinatensystems sind in den Figuren eingetragen.

Der erfindungsgemäße optische Sensor 100 zum Nachweisen von Objekten 1 in einem Überwachungsbereich 80 weist erfindungsgemäß zunächst einen ersten Lichtsender 10 zum Aussenden eines ersten Sendelichtstrahls 11, einen Drehspiegel 20, über welchen der erste Sendelichtstrahl 11 in den Überwachungsbereich 80 geleitet wird, und eine erste Detektoreinheit 30 zum Nachweisen von aus dem Überwachungsbereich 80 von dem nachzuweisenden Objekt 1 zurückgestrahltem Sendelicht 14 auf. Im gezeigten Beispiel ist außerdem eine zweite Detektoreinheit 32 zum Nachweisen von aus dem Überwachungsbereich 80 von dem nachzuweisenden Objekt 1 zurückgestrahltem Sendelicht 14 vorhanden. Zum Aussenden eines zweiten Sendelichtstrahls 13 ist weiterhin ein zweiter Lichtsender 12 vorhanden, wobei eine Senderichtung des ersten Sendelichtstrahls 11 und eine Senderichtung des zweiten Sendelichtstrahls 13 einander entgegengesetzt und jeweils quer zu einer Drehachse 22 des Drehspiegels 20 orientiert sind. Mit der Senderichtung des ersten Sendelichtstrahls 11 und der Senderichtung des zweiten Sendelichtstrahls 13 ist jeweils die Richtung des betreffenden Sendelichtstrahls gemeint, bevor dieser auf den Drehspiegel 20 trifft.

Zum Ansteuern des ersten Lichtsenders 10, des zweiten Lichtsenders 12, der ersten Detektoreinheit 30 und der zweiten Detektoreinheit 32 und zum Auswerten von von der ersten Detektoreinheit 30 und der zweiten Detektoreinheit 32 nachgewiesenem Detektionslicht 14 ist eine Steuereinheit 90, beispielsweise ein Mikrocontroller vorhanden.

Im gezeigten Ausführungsbeispiel verlaufen die Senderichtungen des ersten Sendelichtstrahls 11 und des zweiten Sendelichtstrahls 13 antiparallel und kollinear zueinander. Außerdem liegen die Senderichtungen des ersten Sendelichtstrahls 11 und des zweiten Sendelichtstrahls 13 im gezeigten Beispiel in einer Ebene, die senkrecht auf der Drehachse 22 des Drehspiegels 20 steht. Im gezeigten Ausführungsbeispiel senden der erste Lichtsender 10 und der zweite Lichtsender 12 Sendelicht mit demselben Wellenlängenspektrum, insbesondere mit derselben Wellenlänge, aus. Beispielsweise kann es sich bei dem ersten Lichtsender 10 und dem zweiten Lichtsender 12 jeweils um eine Laserdiode handeln. Es wäre aber auch möglich, dass die beiden Lichtsender Sendelicht mit unterschiedlicher Wellenlänge aussenden.

Dann könnte zweckmäßig jede der Detektoreinheiten 30, 32 einen Farbfilter aufweisen zum selektiven Nachweisen von zurückgestrahltem Sendelicht einer bestimmten Wellenlänge oder eines bestimmten Wellenlängenspektrums, das von einem der Lichtsender 10, 12 stammt.

Jeder der Lichtsender 10, 12 weist eine Sendeoptik auf, umfassend beispielsweise eine Linse und/oder einen Hohlspiegel, die in Figur 1 nicht dargestellt ist. Weiterhin sind im gezeigten Beispiel der erste Sendelichtstrahl 11 und der zweite Sendelichtstrahl 13 gepulste Lichtstrahlen.

Der Drehspiegel 20 besteht im gezeigten Beispiel aus einem Spiegelkörper, beispielsweise aus Kunststoff, und weist eine einzige Spiegelfläche 21 auf, die beispielsweise eine ebene Spiegelfläche sein kann. Die Drehachse 22 des Drehspiegels 20 kann dann parallel zur Oberfläche der Spiegelfläche 21 verlaufen. Es ist aber auch möglich, dass durch die Spiegelfläche 21 ein Hohlspiegel gebildet ist. Zum Antrieb des Drehspiegels kann ein Platinenmotor vorhanden sein. In dem in Figur 1 gezeigten Beispiel dreht sich der Drehspiegel 20 in Uhrzeigerrichtung.

Jede der Detektoreinheiten 30, 32 weist eine Empfangsoptik 31, 33, beispielsweise eine Linse oder einen Hohlspiegel, auf.

Die Komponenten des optischen Sensors sind in einem Gehäuse 40 angeordnet, in dem die Lichtsender 10, 12 durch eine Trennwand 50, die für das Sendelicht 11, 13, 14 undurchlässig ist, von den Detektionseinheiten 30, 32 getrennt ist. An einer Vorderseite des Gehäuses 40 ist eine für das Sendelicht 11, 13, 14 transparente Platte oder transparente Wand 42 vorhanden.

Die Steuereinheit 90 ist bei dem Beispiel der Figuren 1 und 2 dazu eingerichtet, die Lichtsender 10, 12 alternierend zum Aussenden von Lichtpulsen anzusteuern. Die Steuereinheit 90 ist zum Ansteuern der ersten Detektoreinheit 30 und der zweiten Detektoreinheit 32 dergestalt eingerichtet, dass mit der ersten Detektoreinheit 30 von einem Objekt 1 zurückgestrahltes Sendelicht 14 des ersten Lichtsenders 10 nachweisbar ist und mit der zweiten Detektoreinheit 32 von dem Objekt 1 zurückgestrahltes Sendelicht 14 des zweiten Lichtsenders 12 nachgewiesen werden kann.

Die Steuereinheit 90 ist außerdem dazu eingerichtet, aus Sendezeitpunkten von Lichtpulsen und zugehörigen Empfangszeitpunkten jeweils eine Laufzeit und anhand der Laufzeit eine Entfernung d des zurückstrahlenden Objekts 1 zu bestimmen.

Diejenigen Komponenten, zu deren Steuerung die Steuereinheit 90 eingerichtet ist und deren Daten, insbesondere Messdaten, die Steuereinheit 90 auswertet, sind mit der Steuereinheit 90 geeignet wirkungsmäßig, insbesondere durch Verbindungsleitungen, verbunden, die in den Figuren nicht dargestellt sind.

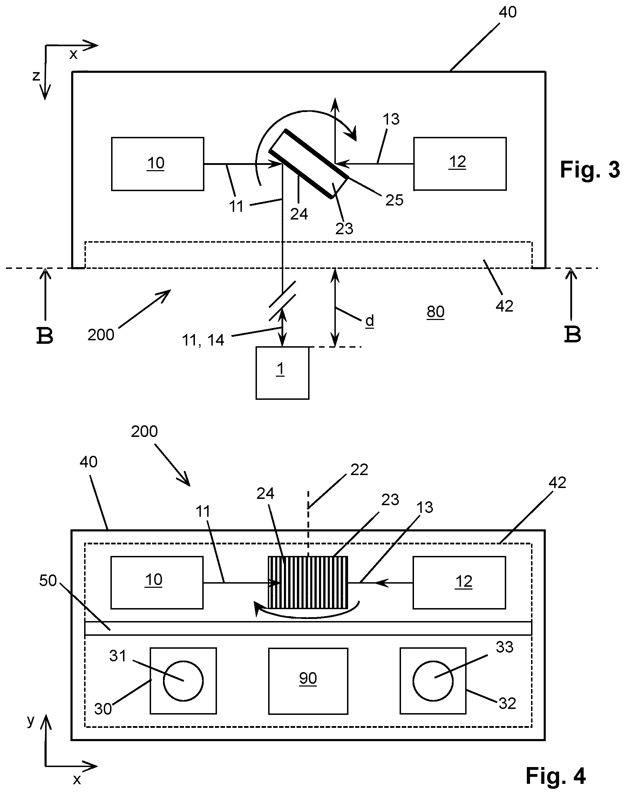

Ein zweites Ausführungsbeispiel eines erfindungsgemäßen optischen Sensors 200 ist in den Figuren 3 und 4 gezeigt. Es werden nur die Unterschiede im Vergleich zum optischen Sensor 100 der Figuren 1 und 2 erläutert. Der optische Sensor 200 unterscheidet sich von dem optischen Sensor 100 der Figuren 1 und 2 dadurch, dass der Drehspiegel 23 zueinander und zur Drehachse 22 parallele Spiegelflächen 24, 25 aufweist. Bei gleicher Drehgeschwindigkeit der Drehspiegel 23 und 20 ist bei dem optischen Sensor 200 eine Scanfrequenz, mit welcher der Überwachungsbereich 80 abgescannt wird, im Vergleich zum optischen Sensor 100 doppelt so groß. Die Steuereinheit 90 muss entsprechend an die erhöhte Rate der Messdaten angepasst werden.

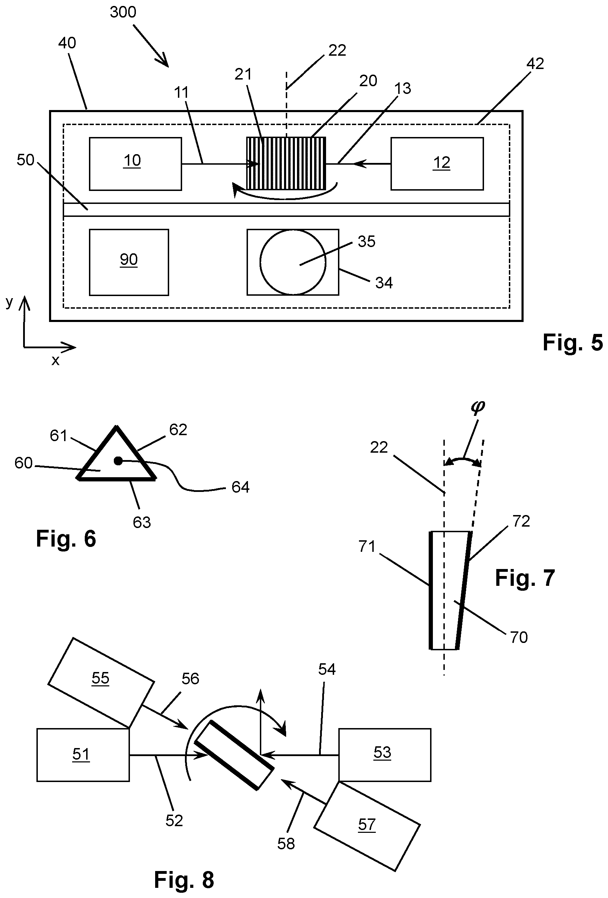

Ein drittes Ausführungsbeispiel eines erfindungsgemäßen optischen Sensors 300 ist schematisch in der Figur 5 dargestellt. Auch hier werden nur die Unterschiede im Vergleich zum optischen Sensor 100 der Figuren 1 und 2 beschrieben. Bei dem optischen Sensor 300 ist nur eine einzige Detektoreinheit 34 mit einer Detektoroptik 35 vorhanden. Die Steuereinheit 90 ist entsprechend zum Ansteuern der Detektoreinheit 34 dergestalt eingerichtet, dass mit der Detektoreinheit 34 sowohl von einem Objekt 1 zurückgestrahltes Sendelicht des ersten Lichtsenders 10 als auch von dem Objekt 1 zurückgestrahltes Sendelicht des zweiten Lichtsenders 12 nachweisbar ist.

Figur 6 zeigt schematisch einen Drehspiegel 60 mit drei Spiegelflächen 61, 62, 63, die jeweils parallel zur Drehachse 64 orientiert sind und beispielsweise symmetrisch derart angeordnet sein können, dass im Querschnitt ein gleichseitiges Dreieck gebildet wird. Der Drehspiegel 60 könnte beispielsweise anstelle des Drehspiegels 23 bei dem Ausführungsbeispiel der Figuren 3 und 4 zum Einsatz kommen.

Wenn die Drehgeschwindigkeit des Drehspiegels 60 gleich groß ist wie diejenige des Drehspiegels 23 würde die Rate, mit welcher der Überwachungsbereich 80 abgescannt wird, noch einmal um 50 % erhöht. Die Steuereinheit 90 müsste wieder entsprechend an die erhöhte Rate der Messdaten angepasst werden.

Figur 7 zeigt schematisch einen Querschnitt durch einen als Drehspiegel verwendeten Doppelspiegel 70, bei dem die Drehachse 22 parallel verläuft zur ersten Spiegelfläche 71 und eine gegenüberliegende zweite Spiegelfläche 72 um einen Winkel φ relativ zur Drehachse 22 und somit auch relativ zu der ersten Spiegelfläche 71 angestellt oder verkippt ist. Der Winkel φ kann in typischen Fällen beispielsweise +/-1,5°, +/-3°, +/-5°, +/-7° betragen. In ähnlicher Weise können bei einem Polygonspiegel die Spiegelflächen relativ zur Drehachse nach oben oder nach unten verkippt sein.

Figur 8 zeigt schematisch eine Senderanordnung mit zwei Senderpaaren zur Verwendung bei einem erfindungsgemäßen optischen Sensor. Konkret sind ein erster Lichtsender 51 zum Aussenden eines ersten Sendelichtstrahls 52, ein zweiter Lichtsender 53 zum Aussenden eines zweiten Sendelichtstrahls 54, ein dritter Lichtsender 55 zum Aussenden eines dritten Sendelichtstrahls 56 und ein vierter Lichtsender 57 zum Aussenden eines vierten Sendelichtstrahls 58 vorhanden, die jeweils über den Drehspiegel, beispielsweise den Drehspiegel 23 der Figur 3, in den Überwachungsbereich 80 geleitet werden. Die Steuereinheit 90 ist zweckmäßig zum Ansteuern der Lichtsender 51, 53, 55, 57 eingerichtet.

In dem Ausführungsbeispiel der Figur 8 verlaufen die Senderichtungen von den Sendelichtstrahlen 52, 54, 56, 58 nicht in ein und derselben Ebene, sondern sie sind in jeweils unterschiedlichen Winkeln relativ zu einer Ebene, die senkrecht ist zur Drehachse des Drehspiegels, geringfügig, beispielsweise um +/-1,5°, +/-3°, +/-5°, +/-7°, verkippt. Diese Verkippung ist in der Figur nicht dargestellt. Dadurch können auch Raumbereiche des Überwachungsbereich 80 oberhalb und unterhalb der Papierebene abgescannt werden und es können auch dort befindliche Objekte detektiert und deren Abstände gemessen werden.

Mit der vorliegenden Erfindung wird ein neuartiger optischer Sensor bereitgestellt, bei dem mit geringem technischem Aufwand und bei kompakter Anordnung die Überwachung von großen Raumbereichen möglich ist. Der optische Sensor eignet sich insbesondere zum Einsatz bei automatischen Türen und Toren sowie autonomen Fahrzeugen wie führerlose Transportsysteme (FTS).

Inhalt der Anmeldung sind mindestens die folgenden Gegenstände:
1. Optischer Sensor zum Nachweisen von Objekten (1) in einem Überwachungsbereich (80),
   mit einem ersten Lichtsender (10) zum Aussenden eines ersten Sendelichtstrahls (11),
   mit einem Drehspiegel (20), über welchen der erste Sendelichtstrahl (11) in den Überwachungsbereich (80) geleitet wird,
   mit einer Detektoreinheit (30) zum Nachweisen von aus dem Überwachungsbereich (80) von einem nachzuweisenden Objekt (1) zurückgestrahltem Sendelicht (14) als Detektionslicht,
   mit einer Steuereinheit (90) zum Ansteuern des ersten Lichtsenders (10) und der Detektoreinheit (30) und zum Auswerten von von der Detektoreinheit (30) nachgewiesenem Detektionslicht (14),
   dadurch gekennzeichnet,
   dass zum Aussenden eines zweiten Sendelichtstrahls (13) ein zweiter Lichtsender (12) vorhanden ist,
   dass eine Senderichtung des ersten Sendelichtstrahls (11) und eine Senderichtung des zweiten Sendelichtstrahls (13) einander entgegengesetzt und jeweils quer zu einer Drehachse des Drehspiegels (20) orientiert sind und dass die Steuereinheit (90) auch zum Ansteuern des zweiten Lichtsenders (12) eingerichtet ist.
2. Optischer Sensor nach Anspruch 1,
   dadurch gekennzeichnet,
   dass eine zur Senderichtung des ersten Sendelichtstrahls (11) parallele Richtung, die den zweiten Sendelichtstrahl (13) schneidet, zu dem zweiten Sendelichtstrahl (13) einen Winkel einnimmt, der zwischen 165° und 195°, bevorzugt zwischen 175° und 185° und besonders bevorzugt zwischen 177 und 182° liegt.
3. Optischer Sensor nach Anspruch 1 oder 2,
   dadurch gekennzeichnet,
   dass die Senderichtung des ersten Sendelichtstrahls (11) und des zweiten Sendelichtstrahls (13) antiparallel und kollinear verlaufen.
4. Optischer Sensor nach einem der Ansprüche 1 bis 3,
   dadurch gekennzeichnet,
   dass eine Senderichtung von einem Lichtsender, von mehreren Lichtsendern oder von allen Lichtsendern in einer Ebene liegt, die senkrecht auf der Drehachse (22) des Drehspiegels (20; 23; 60) steht.
5. Optischer Sensor nach einem der Ansprüche 1 bis 4,
   dadurch gekennzeichnet,
   dass eine Senderichtung von einem Lichtsender, von mehreren Lichtsendern oder von allen Lichtsendern gegen eine Ebene, die senkrecht auf der Drehachse (22) des Drehspiegels (20; 23; 60) steht, um einen Kippwinkel verkippt ist.
6. Optischer Sensor nach einem der Ansprüche 1 bis 5,
   dadurch gekennzeichnet,
   dass ein dritter Lichtsender (55) zum Aussenden eines dritten Sendelichtstrahls (56) und ein vierter Lichtsender (57) zum Aussenden eines vierten Sendelichtstrahls (58) vorhanden sind, wobei der dritte Sendelichtstrahl (56) und der vierte Sendelichtstrahl (58) über den Drehspiegel (20; 23; 60) in den Überwachungsbereich (80) geleitet werden, und
   dass die Steuereinheit (90) auch zum Ansteuern des dritten Lichtsenders (55) und des vierten Lichtsenders (57) eingerichtet ist.
7. Optischer Sensor nach einem der Ansprüche 1 bis 4 oder 6,
   dadurch gekennzeichnet,
   dass die Senderichtungen von allen Sendelichtstrahlen (52, 54, 56, 58) in ein und derselben Ebene verlaufen.
8. Optischer Sensor nach einem der Ansprüche 1 bis 7,
   dadurch gekennzeichnet,
   dass einer, mehrere oder jeder der Lichtsender (10, 12; 51, 53, 55, 57) Sendelicht mit einem im Vergleich zu den anderen Lichtsendern unterschiedlichen Wellenlängenspektrum aussendet.
9. Optischer Sensor nach einem der Ansprüche 1 bis 8,
   dadurch gekennzeichnet,
   dass der erste Sendelichtstrahl (11; 52) und der zweite Sendelichtstrahl (13; 54) und gegebenenfalls weitere Sendelichtstrahlen (56, 58) gepulste Lichtstrahlen sind.
10. Optischer Sensor nach einem der Ansprüche 1 bis 9,
   dadurch gekennzeichnet,
   dass mindestens einer, mehrere oder jeder der Lichtsender (10, 12; 51, 53, 55, 57) eine Sendeoptik, beispielsweise eine Linse und/oder einen Hohlspiegel, aufweist.
11. Optischer Sensor nach einem der Ansprüche 1 bis 10,
   dadurch gekennzeichnet,
   dass die Steuereinheit (90) dazu eingerichtet ist, die Lichtsender (10, 12, 51, 53, 55, 57) alternierend zum Aussenden von Lichtpulsen anzusteuern.
12. Optischer Sensor nach einem der Ansprüche 1 bis 11,
   dadurch gekennzeichnet,
   dass die Steuereinheit (90) dazu eingerichtet ist, aus Sendezeitpunkten von Lichtpulsen und jeweils zugehörigen Empfangszeitpunkten jeweils eine Laufzeit und anhand der Laufzeit eine Entfernung (d) eines zurückstrahlenden Objekts (1) zu bestimmen.
13. Optischer Sensor nach einem der Ansprüche 1 bis 12,
   dadurch gekennzeichnet,
   dass die Steuereinheit (90) zum Ansteuern der Detektoreinheit (34) dergestalt eingerichtet ist, dass mit der Detektoreinheit (34) sowohl von einem Objekt (1) zurückgestrahltes Sendelicht des ersten Lichtsenders (10, 51) als auch von dem Objekt (1) zurückgestrahltes Sendelicht des zweiten Lichtsenders (12, 53) und gegebenenfalls von dem Objekt (1) zurückgestrahltes Sendelicht von mindestens einem weiteren Lichtsender (55, 57) als Detektionslicht (14) nachweisbar ist.
14. Optischer Sensor nach einem der Ansprüche 1 bis 12,
   dadurch gekennzeichnet,
   dass die Detektoreinheit eine erste Detektoreinheit (30) ist und dass eine zweite Detektoreinheit (32) vorhanden ist und
   dass die Steuereinheit (90) zum Ansteuern der ersten Detektoreinheit (30) und der zweiten Detektoreinheit (32) dergestalt eingerichtet ist, dass mit der ersten Detektoreinheit (30) von einem Objekt (1) zurückgestrahltes Sendelicht des ersten Lichtsenders (10) nachweisbar ist und mit der zweiten Detektoreinheit (32) von dem Objekt (1) zurückgestrahltes Sendelicht des zweiten Lichtsenders (12) nachweisbar ist.
15. Optischer Sensor nach einem der Ansprüche 1 bis 12 oder 14,
   dadurch gekennzeichnet,
   dass für jeden Lichtsender (51, 53, 55, 57) eine separate Detektoreinheit vorhanden ist.
16. Optischer Sensor nach einem der Ansprüche 1 bis 15,
   dadurch gekennzeichnet,
   dass eine, mehrere oder jede der Detektoreinheiten (30, 32) eine Empfangsoptik, beispielsweise eine Linse oder einen Hohlspiegel, aufweist.
17. Optischer Sensor nach einem der Ansprüche 1 bis 16,
   dadurch gekennzeichnet,
   dass eine, mehrere oder jede der Detektoreinheiten (30, 32) einen Farbfilter aufweist zum selektiven Nachweisen von zurückgestrahltem Sendelicht einer bestimmten Wellenlänge oder eines bestimmten Wellenlängenspektrums.
18. Optischer Sensor nach einem der Ansprüche 1 bis 17,
   dadurch gekennzeichnet,
   dass zum Antrieb des Drehspiegels ein Platinenmotor vorhanden ist.
19. Optischer Sensor nach Anspruch 18,
   dadurch gekennzeichnet,
   dass der Platinenmotor ein Miniaturmotor und bevorzugt ein Synchronmotor ist, wobei mindestens eine Wicklung des Platinenmotors in einer Platine integriert ist.
20. Optischer Sensor nach einem der Ansprüche 1 bis 19,
   dadurch gekennzeichnet,
   dass der Drehspiegel einen drehbaren Polygonspiegel mit mehr als zwei Spiegelflächen aufweist.
21. Optischer Sensor nach einem der Ansprüche 1 bis 20,
   dadurch gekennzeichnet,
   dass der Drehspiegel (20) eine einzige Spiegelfläche (21) aufweist oder dass der Drehspiegel (23) zwei Spiegelflächen (24, 25) aufweist.
22. Optischer Sensor nach Anspruch 21,
   dadurch gekennzeichnet,
   dass die beiden Spiegelflächen (24, 25) zueinander parallel sind.
23. Optischer Sensor nach einem der Ansprüche 1 bis 22,
   dadurch gekennzeichnet,
   dass eine Drehachse des Drehspiegels (20, 23, 60) parallel zu einer Oberfläche von einer, von mehreren oder von jeder Spiegelfläche (21; 24, 25; 61, 62, 63) verläuft.
24. Optischer Sensor nach einem der Ansprüche 1 bis 23,
   dadurch gekennzeichnet,
   dass die Normalenrichtungen der Spiegelflächen (24, 25; 61, 62, 63) relativ zur Ebene, die senkrecht zur Richtung einer Drehachse des Drehspiegels (20; 23; 60) verläuft, um unterschiedliche Verkippungswinkel verkippt ist.
25. Optischer Sensor nach einem der Ansprüche 1 bis 24,
   dadurch gekennzeichnet,
   dass ein Gehäuse (40) vorhanden ist, in dem die Lichtsender (10, 12, 51, 53, 55, 57) durch eine Trennwand (50), die für das Sendelicht undurchlässig ist, von der Detektionseinheit oder von den Detektionseinheiten getrennt ist.

### Bezugszeichenliste

- 1: Objekt
- 10: erster Sender, LED oder Laserdiode
- 11: Sendelicht von Sender 10
- 12: zweiter Sender, LED oder Laserdiode
- 13: Sendelicht von Sender 12
- 14: von Objekt 1 im Überwachungsbereich 80 zurückgestrahltes Sendelicht, Detektionslicht
- 20: Drehspiegel
- 21: reflektierende Oberfläche von Drehspiegel 20
- 22: Drehachse von Drehspiegel 20
- 23: Drehspiegel
- 24: erste spiegelnde Fläche von Drehspiegel 23
- 25: zweite spiegelnde Fläche von Drehspiegel 23
- 30: erste Detektoreinheit
- 31: Empfangsoptik von Detektoreinheit 30
- 32: zweite Detektoreinheit
- 33: Empfangsoptik von zweiter Detektoreinheit
- 34: Detektoreinheit, gemeinsame Detektoreinheit
- 35: Empfangsoptik von Detektoreinheit 34
- 40: Gehäuse
- 42: Frontscheibe, transparent für Sendelicht 11,13, 14
- 50: Trennplatte, Platine
- 51: erster Sender, LED oder Laserdiode
- 52: Sendelicht von Sender 51
- 53: zweiter Sender, LED oder Laserdiode
- 54: Sendelicht von Sender 53
- 55: dritter Sender, LED oder Laserdiode
- 56: Sendelicht von Sender 55
- 57: vierter Sender, LED oder Laserdiode
- 58: Sendelicht von Sender 57
- 60: Drehspiegel
- 61: spiegelnde Fläche von Drehspiegel 60
- 62: spiegelnde Fläche von Drehspiegel 60
- 63: spiegelnde Fläche von Drehspiegel 60
- 64: Drehachse von Drehspiegel 60
- 70: Drehspiegel, Doppelspiegel
- 71: erste Spiegelfläche von Drehspiegel 70
- 72: zweite Spiegelfläche von Drehspiegel 70
- 90: Steuereinheit
- 100: erstes Ausführungsbeispiel eines erfindungsgemäßen optischen Sensors
- 200: zweites Ausführungsbeispiel eines erfindungsgemäßen optischen Sensors
- 300: drittes Ausführungsbeispiel eines erfindungsgemäßen optischen Sensors
- d: Abstand von Objekt 1 vom optischen Sensor 100, 200
- x, y, z: rechtshändiges Koordinatensystem
- φ: Winkel, um den die zweite Spiegelfläche 72 des Drehspiegels 70 relativ zur Drehachse 22 und zur ersten Spiegelfläche 71 verkippt ist

## Patentansprüche

1. Optischer Sensor zum Nachweisen von Objekten (1) in einem Überwachungsbereich (80),
mit einem ersten Lichtsender (10) zum Aussenden eines ersten Sendelichtstrahls (11),
mit einem Drehspiegel (20), über welchen der erste Sendelichtstrahl (11) in den Überwachungsbereich (80) geleitet wird,
mit einer Detektoreinheit (30) zum Nachweisen von aus dem Überwachungsbereich (80) von einem nachzuweisenden Objekt (1) zurückgestrahltem Sendelicht (14) als Detektionslicht,
mit einer Steuereinheit (90) zum Ansteuern des ersten Lichtsenders (10) und der Detektoreinheit (30) und zum Auswerten von von der Detektoreinheit (30) nachgewiesenem Detektionslicht (14),
**dadurch gekennzeichnet,**
**dass** zum Aussenden eines zweiten Sendelichtstrahls (13) ein zweiter Lichtsender (12) vorhanden ist,
**dass** eine Senderichtung des ersten Sendelichtstrahls (11) und eine Senderichtung des zweiten Sendelichtstrahls (13) einander entgegengesetzt und jeweils quer zu einer Drehachse des Drehspiegels (20) orientiert sind und
**dass** die Steuereinheit (90) auch zum Ansteuern des zweiten Lichtsenders (12) eingerichtet ist.

2. Optischer Sensor nach Anspruch 1,
**dadurch gekennzeichnet,**
**dass** eine zur Senderichtung des ersten Sendelichtstrahls (11) parallele Richtung, die den zweiten Sendelichtstrahl (13) schneidet, zu dem zweiten Sendelichtstrahl (13) einen Winkel einnimmt, der zwischen 165° und 195°, bevorzugt zwischen 175° und 185° und besonders bevorzugt zwischen 177 und 182° liegt, und/oder
**dass** die Senderichtung des ersten Sendelichtstrahls (11) und des zweiten Sendelichtstrahls (13) antiparallel und kollinear verlaufen und/oder
**dass** eine Senderichtung von einem Lichtsender, von mehreren Lichtsendern oder von allen Lichtsendern in einer Ebene liegt, die senkrecht auf der Drehachse (22) des Drehspiegels (20; 23; 60) steht.

3. Optischer Sensor nach einem der Ansprüche 1 oder 2,
**dadurch gekennzeichnet,**
**dass** die Senderichtungen von allen Sendelichtstrahlen (52, 54, 56, 58) in ein und derselben Ebene verlaufen.

4. Optischer Sensor nach einem der Ansprüche 1 oder 2,
**dadurch gekennzeichnet,**
**dass** eine Senderichtung von einem Lichtsender, von mehreren Lichtsendern oder von allen Lichtsendern gegen eine Ebene, die senkrecht auf der Drehachse (22) des Drehspiegels (20; 23; 60) steht, um einen Kippwinkel verkippt ist.

5. Optischer Sensor nach einem der Ansprüche 1 bis 4,
**dadurch gekennzeichnet,**
**dass** ein dritter Lichtsender (55) zum Aussenden eines dritten Sendelichtstrahls (56) und ein vierter Lichtsender (57) zum Aussenden eines vierten Sendelichtstrahls (58) vorhanden sind, wobei der dritte Sendelichtstrahl (56) und der vierte Sendelichtstrahl (58) über den Drehspiegel (20; 23; 60) in den Überwachungsbereich (80) geleitet werden, und
**dass** die Steuereinheit (90) auch zum Ansteuern des dritten Lichtsenders (55) und des vierten Lichtsenders (57) eingerichtet ist.

6. Optischer Sensor nach einem der Ansprüche 1 bis 5,
**dadurch gekennzeichnet,**
**dass** einer, mehrere oder jeder der Lichtsender (10, 12; 51, 53, 55, 57) Sendelicht mit einem im Vergleich zu den anderen Lichtsendern unterschiedlichen Wellenlängenspektrum aussendet.

7. Optischer Sensor nach einem der Ansprüche 1 bis 6,
**dadurch gekennzeichnet,**
**dass** der erste Sendelichtstrahl (11; 52) und der zweite Sendelichtstrahl (13; 54) und gegebenenfalls weitere Sendelichtstrahlen (56, 58) gepulste Lichtstrahlen sind.

8. Optischer Sensor nach einem der Ansprüche 1 bis 7,
**dadurch gekennzeichnet,**
**dass** die Steuereinheit (90) dazu eingerichtet ist, die Lichtsender (10, 12, 51, 53, 55, 57) alternierend zum Aussenden von Lichtpulsen anzusteuern.

9. Optischer Sensor nach einem der Ansprüche 1 bis 8,
**dadurch gekennzeichnet,**
**dass** die Steuereinheit (90) dazu eingerichtet ist, aus Sendezeitpunkten von Lichtpulsen und jeweils zugehörigen Empfangszeitpunkten jeweils eine Laufzeit und anhand der Laufzeit eine Entfernung (d) eines zurückstrahlenden Objekts (1) zu bestimmen.

10. Optischer Sensor nach einem der Ansprüche 1 bis 9,
**dadurch gekennzeichnet,**
**dass** die Detektoreinheit eine erste Detektoreinheit (30) ist und dass eine zweite Detektoreinheit (32) vorhanden ist und
**dass** die Steuereinheit (90) zum Ansteuern der ersten Detektoreinheit (30) und der zweiten Detektoreinheit (32) dergestalt eingerichtet ist, dass mit der ersten Detektoreinheit (30) von einem Objekt (1) zurückgestrahltes Sendelicht des ersten Lichtsenders (10) nachweisbar ist und mit der zweiten Detektoreinheit (32) von dem Objekt (1) zurückgestrahltes Sendelicht des zweiten Lichtsenders (12) nachweisbar ist.

11. Optischer Sensor nach einem der Ansprüche 1 bis 10,
**dadurch gekennzeichnet,**
**dass** für jeden Lichtsender (51, 53, 55, 57) eine separate Detektoreinheit vorhanden ist.

12. Optischer Sensor nach einem der Ansprüche 1 bis 11,
**dadurch gekennzeichnet,**
**dass** die Steuereinheit (90) zum Ansteuern der Detektoreinheit (34) dergestalt eingerichtet ist, dass mit der Detektoreinheit (34) sowohl von einem Objekt (1) zurückgestrahltes Sendelicht des ersten Lichtsenders (10, 51) als auch von dem Objekt (1) zurückgestrahltes Sendelicht des zweiten Lichtsenders (12, 53) und gegebenenfalls von dem Objekt (1) zurückgestrahltes Sendelicht von mindestens einem weiteren Lichtsender (55, 57) als Detektionslicht (14) nachweisbar ist.

13. Optischer Sensor nach einem der Ansprüche 1 bis 12,
**dadurch gekennzeichnet,**
**dass** eine, mehrere oder jede der Detektoreinheiten (30, 32) einen Farbfilter aufweist zum selektiven Nachweisen von zurückgestrahltem Sendelicht einer bestimmten Wellenlänge oder eines bestimmten Wellenlängenspektrums.

14. Optischer Sensor nach einem der Ansprüche 1 bis 13,
**dadurch gekennzeichnet,**
**dass** mindestens einer, mehrere oder jeder der Lichtsender (10, 12; 51, 53, 55, 57) eine Sendeoptik, beispielsweise eine Linse und/oder einen Hohlspiegel, aufweist und/oder
**dass** eine, mehrere oder jede der Detektoreinheiten (30, 32) eine Empfangsoptik, beispielsweise eine Linse oder einen Hohlspiegel, aufweist.

15. Optischer Sensor nach einem der Ansprüche 1 bis 14,
**dadurch gekennzeichnet,**
**dass** zum Antrieb des Drehspiegels ein Platinenmotor vorhanden ist.

16. Optischer Sensor nach Anspruch 15,
**dadurch gekennzeichnet,**
**dass** der Platinenmotor ein Miniaturmotor und bevorzugt ein Synchronmotor ist, wobei mindestens eine Wicklung des Platinenmotors in einer Platine integriert ist.

17. Optischer Sensor nach einem der Ansprüche 1 bis 16,
**dadurch gekennzeichnet,**
**dass** der Drehspiegel einen drehbaren Polygonspiegel mit mehr als zwei Spiegelflächen aufweist.

18. Optischer Sensor nach einem der Ansprüche 1 bis 17,
**dadurch gekennzeichnet,**
**dass** der Drehspiegel (20) eine einzige Spiegelfläche (21) aufweist oder dass der Drehspiegel (23) zwei Spiegelflächen (24, 25) aufweist.

19. Optischer Sensor nach Anspruch 18,
**dadurch gekennzeichnet,**
**dass** die beiden Spiegelflächen (24, 25) zueinander parallel sind.

20. Optischer Sensor nach einem der Ansprüche 1 bis 19,
**dadurch gekennzeichnet,**
**dass** eine Drehachse des Drehspiegels (20, 23, 60) parallel zu einer Oberfläche von einer, von mehreren oder von jeder Spiegelfläche (21; 24, 25; 61, 62, 63) verläuft.

21. Optischer Sensor nach einem der Ansprüche 1 bis 20,
**dadurch gekennzeichnet,**
**dass** die Normalenrichtungen der Spiegelflächen (24, 25; 61, 62, 63) relativ zur Ebene, die senkrecht zur Richtung einer Drehachse des Drehspiegels (20; 23; 60) verläuft, um unterschiedliche Verkippungswinkel verkippt ist.

22. Optischer Sensor nach einem der Ansprüche 1 bis 21,
**dadurch gekennzeichnet,**
**dass** ein Gehäuse (40) vorhanden ist, in dem die Lichtsender (10, 12, 51, 53, 55, 57) durch eine Trennwand (50), die für das Sendelicht undurchlässig ist, von der Detektionseinheit oder von den Detektionseinheiten getrennt ist.
